(19) Europäisches Patentamt / European Patent Office / Office européen des brevets

(11) **EP 3 747 121 B1**

(12) **FASCICULE DE BREVET EUROPEEN**

(45) Date de publication et mention de la délivrance du brevet:
**23.02.2022 Bulletin 2022/08**

(21) Numéro de dépôt: **19701120.8**

(22) Date de dépôt: **25.01.2019**

(51) Classification Internationale des Brevets (IPC):
**H02P 6/20** *(2016.01)*   **H02P 9/48** *(2006.01)*

(52) Classification Coopérative des Brevets (CPC):
**H02P 9/48; H02P 6/20**

(86) Numéro de dépôt international:
**PCT/EP2019/051824**

(87) Numéro de publication internationale:
**WO 2019/149624 (08.08.2019 Gazette 2019/32)**

(54) **PROCÉDÉ D'OPTIMATION DU PASSAGE D'UN MODE DE FONCTIONNEMENT À UN AUTRE POUR UNE MACHINE ÉLECTRIQUE TOURNANTE**

VERFAHREN ZUR OPTIMIERUNG DES DURCHGANGS VON EINER BETRIEBSART IN EINE ANDERE FÜR EINE ROTIERENDE ELEKTRISCHE MASCHINE

METHOD FOR OPTIMISING THE PASSAGE FROM ONE OPERATING MODE TO ANOTHER FOR A ROTATING ELECTRICAL MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.01.2018 FR 1850718**

(43) Date de publication de la demande:
**09.12.2020 Bulletin 2020/50**

(73) Titulaire: **VALEO EQUIPEMENTS ELECTRIQUES MOTEUR**
**94046 Créteil Cedex (FR)**

(72) Inventeurs:
• **CARREIRO, Wilfried**
  **94046 CRETEIL CEDEX (FR)**
• **BERNARD, François-Xavier**
  **94046 CRETEIL CEDEX (FR)**
• **ROMAGNOLO, Vincent**
  **94046 CRETEIL CEDEX (FR)**
• **MALBRANQUE, Ronald**
  **94046 CRETEIL CEDEX (FR)**

(74) Mandataire: **Valeo Powertrain Systems Service Propriété Intellectuelle Immeuble le Delta 14, avenue des Béguines 95892 Cergy Pontoise (FR)**

(56) Documents cités:
**EP-A2- 1 283 595   US-A- 5 075 616**
**US-B1- 7 342 382**

**Description**

La présente invention porte sur un procédé d'optimisation du passage d'un mode de fonctionnement à un autre pour une machine électrique tournante. De façon connue en soi, une machine électrique réversible peut être accouplée au moteur thermique via la façade accessoires. Cette machine électrique, appelée communément alterno-démarreur, est apte à fonctionner dans un mode générateur pour recharger une batterie du véhicule ainsi que dans un mode moteur pour fournir un couple au véhicule.

Le mode générateur peut être utilisé dans une fonction de freinage récupératif permettant à la machine électrique de fournir de l'énergie électrique à la batterie lors d'une phase de freinage.

Le mode moteur peut notamment être utilisé dans une fonction d'arrêt et de redémarrage automatique du moteur thermique en fonction des conditions de circulation (fonction dite STT pour "stop and start" en anglais), une fonction d'assistance au calage du moteur thermique, une fonction dite "boost" en anglais permettant à la machine électrique d'assister ponctuellement le moteur thermique lors d'une phase de roulage en mode thermique, et une fonction de roue libre, dite de "coasting" en anglais, permettant d'automatiser l'ouverture de la chaîne de traction sans action explicite du conducteur pour réduire le régime moteur ou l'arrêter afin de minimiser la consommation en carburant ainsi que les émissions polluantes. Le document US5075616A décrit un procédé de pilotage d'une machine électrique tournante pour véhicule automobile suivant le préambule de la revendication 1.

Dans les configurations classiques à rotor bobiné, la machine d'état gérant les différentes fonctions impose de défluxer complètement le rotor lors de la sortie d'un mode en imposant un courant d'excitation nul, puis de fluxer de nouveau le rotor lors de l'entrée dans le mode suivant en imposant un courant d'excitation à l'intérieur du rotor. Or, ces temps de défluxage et de refluxage du rotor diminuent le temps de disponibilité de la machine électrique.

La présente invention vise à remédier efficacement à ces inconvénients en proposant un procédé de pilotage d'une machine électrique tournante pour véhicule automobile comportant un stator et un rotor bobiné, le rotor bobiné étant destiné à être parcouru par un courant d'excitation, ladite machine électrique tournante étant apte à fonctionner dans un mode alternateur et dans un mode moteur, lorsque la machine électrique tournante passe d'un mode de fonctionnement à un autre, ledit procédé comporte une étape de commande du rotor de sorte que le courant d'excitation évolue d'une première valeur de consigne vers une deuxième valeur de consigne en passant par une valeur de consigne intermédiaire minimale strictement positive, caractérisé en ce que ladite valeur de consigne intermédiaire correspondant à un courant d'excitation minimal au-dessus duquel la machine électrique tournante délivre un courant continu en mode générateur et à partir duquel et en dessous duquel la machine électrique tournante ne délivre pas de courant continu.

L'invention permet ainsi, en évitant de défluxer complètement le rotor grâce à la définition de la valeur de consigne intermédiaire, d'améliorer le temps de réponse de la machine électrique tournante sans générer d'à-coup de couple.

Selon une mise en œuvre, la valeur de consigne intermédiaire dépend d'une tension de sortie de la machine électrique et d'une vitesse de rotation du rotor.

Selon une mise en œuvre, la tension de sortie est mesurée entre une borne positive de la machine électrique tournante et une masse constituée par une carcasse de la machine électrique tournante.

Selon une mise en œuvre, la vitesse de rotation du rotor est mesurée au moyen de capteurs, tels que des capteurs analogiques à effet Hall.

Selon une mise en œuvre, la valeur de consigne intermédiaire est déterminée à l'aide d'une cartographie.

Selon une mise en œuvre, la valeur de consigne intermédiaire est déterminée à l'aide d'une formule.

L'invention a également pour objet un module de contrôle pour machine électrique tournante caractérisé en ce que qu'il comporte une mémoire stockant des instructions logicielles pour la mise en œuvre du procédé de pilotage de la machine électrique tournante tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique fonctionnelle de l'alterno-démarreur mettant en œuvre le procédé selon l'invention d'optimisation du passage d'un mode de fonctionnement à un autre de la machine électrique;

La figure 2 est une représentation schématique d'un diagramme d'état de la machine électrique selon la présente invention;

La figure 3a est une représentation graphique de l'évolution, en fonction du temps, du courant d'excitation lors du passage d'un mode de fonctionnement à un autre respectivement pour une stratégie de l'état de l'art et pour une stratégie selon l'invention;

La figure 3b est une représentation graphique illustrant le gain de temps à 95% de la montée du courant d'excitation par rapport à une consigne obtenu grâce au procédé selon l'invention.

Les éléments identiques, similaires, ou analogues, conservent la même référence d'une figure à l'autre.

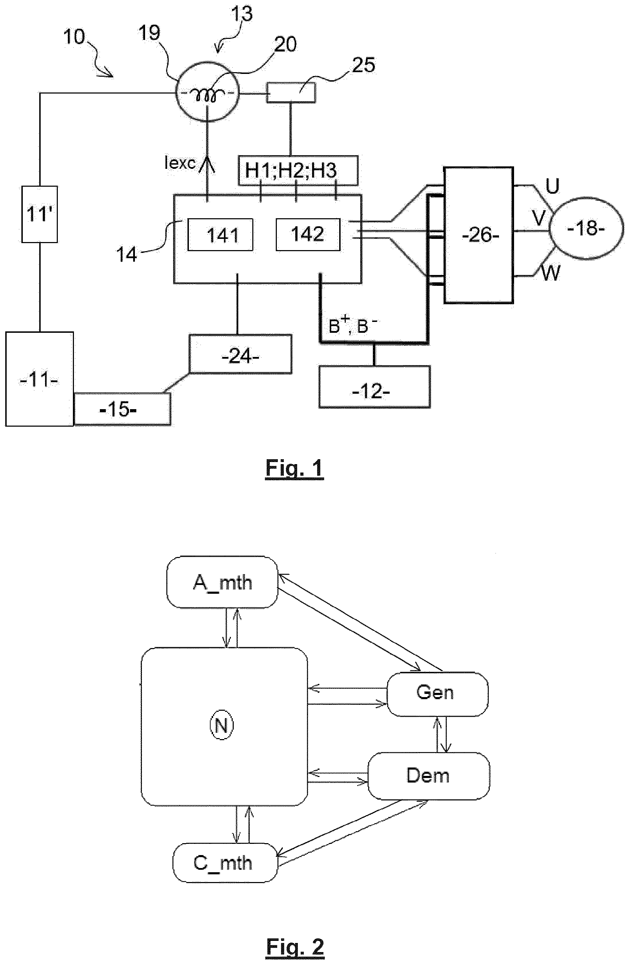

La figure 1 représente de façon schématique un alterno-démarreur 10 selon l'invention. L'alterno-démarreur 10 est destiné à être installé dans un véhicule comportant un réseau électrique de bord connecté à une batterie 12. Le réseau de bord pourra être de type 12V, 24V, ou 48V. L'alterno-démarreur 10 est accouplé à un moteur thermique 11 de façon connue en soi par un système à courroie 11' ou à chaîne implanté en façade accessoires.

En outre, l'alterno-démarreur 10 est apte à communiquer avec un calculateur moteur 15 suivant un protocole de communication de type LIN ("Local

Interconnect Network" en anglais ou "Réseau Internet Local" en français) ou CAN ("Controller Area Network" en anglais qui est un bus de système série).

L'alterno-démarreur 10 pourra fonctionner en mode alternateur appelé également mode générateur ou en mode moteur.

L'alterno-démarreur 10 comprend notamment une partie électrotechnique 13 et un module de contrôle 14.

Plus précisément, la partie électrotechnique 13 comprend un élément induit 18 et un élément inducteur 19. Dans un exemple, l'induit 18 est le stator, et l'inducteur 19 est un rotor comportant une bobine d'excitation 20. Le stator 18 comprend un nombre N de phases. Dans l'exemple considéré, le stator 18 comporte trois phases U, V et W. En variante, le nombre N de phases pourra être égal à 5 pour une machine pentaphasée, à 6 pour une machine de type hexaphasée ou double triphasée ou à 7 pour une machine heptaphasée. Les phases du stator 18 pourront être couplées en triangle ou en étoile. Une combinaison de couplage triangle et étoile est également envisageable.

Le module de contrôle 14 comprend un circuit d'excitation 141 intégrant un hacheur pour générer un courant d'excitation lexc qui est injecté dans la bobine d'excitation 20. La mesure du courant d'excitation lexc est réalisée au moyen d'un capteur à effet Hall.

Les mesures de la position angulaire et de la vitesse angulaire du rotor 19 pourront être réalisées au moyen de capteurs analogiques à effet hall H1, H2, H3 et d'une cible magnétique 25 associée qui est solidaire en rotation du rotor 19.

Le module de contrôle 14 comprend en outre un circuit de contrôle 142, comprenant par exemple un microcontrôleur, qui pilote un onduleur 26 en fonction d'un signal de commande issu du calculateur moteur 15 et reçu via un connecteur de signal 24.

L'onduleur 26 présente des bras comportant chacun deux éléments de commutation permettant de relier sélectivement une phase U, V, W correspondante du stator 18 à la masse ou à la tension d'alimentation de la batterie 12 en fonction de leur état passant ou bloqué. Les éléments de commutation sont de préférence des transistors de puissance de type MOSFET.

Le module de contrôle 14 comporte une mémoire stockant des instructions logicielles pour la mise en œuvre la stratégie de pilotage de la machine électrique décrite ci-après lorsque l'on passe d'un mode de fonctionnement à l'autre de la machine électrique tournante, c'est-à-dire du mode moteur au mode générateur, ou inversement.

Comme cela est illustré sur la figure 2, le mode générateur Gen peut être utilisé dans une fonction de freinage récupératif permettant à la machine électrique de fournir de l'énergie électrique à la batterie lors d'une phase de freinage.

Le mode moteur Mot peut notamment être utilisé dans plusieurs fonctions différentes, telles qu'une fonction Dem d'arrêt et de redémarrage automatique du moteur thermique en fonction des conditions de circulation (fonction dite STT pour "stop and start" en anglais), ou une fonction C_mth d'assistance au calage du moteur thermique. Une fonction A_mth dite "boost" en anglais permet à la machine électrique d'assister ponctuellement le moteur thermique lors d'une phase de roulage en mode thermique. L'état neutre N correspond à un état de la machine électrique dans lequel le rotor 19 a été complètement défluxé, le courant d'excitation étant alors nul.

Conformément à l'invention, lorsque la machine électrique 10 passe d'un mode de fonctionnement à un autre, le circuit d'excitation 141 est commandé de manière à générer un courant d'excitation lexc_inv évoluant d'une première valeur de consigne vers une deuxième valeur de consigne en passant par une valeur de consigne intermédiaire minimale Vint strictement positive. La valeur de consigne intermédiaire Vint correspond à un courant d'excitation minimal au-dessus duquel la machine électrique délivre un courant continu en mode générateur et à partir duquel et en dessous duquel la machine électrique 10 ne délivre pas de courant continu.

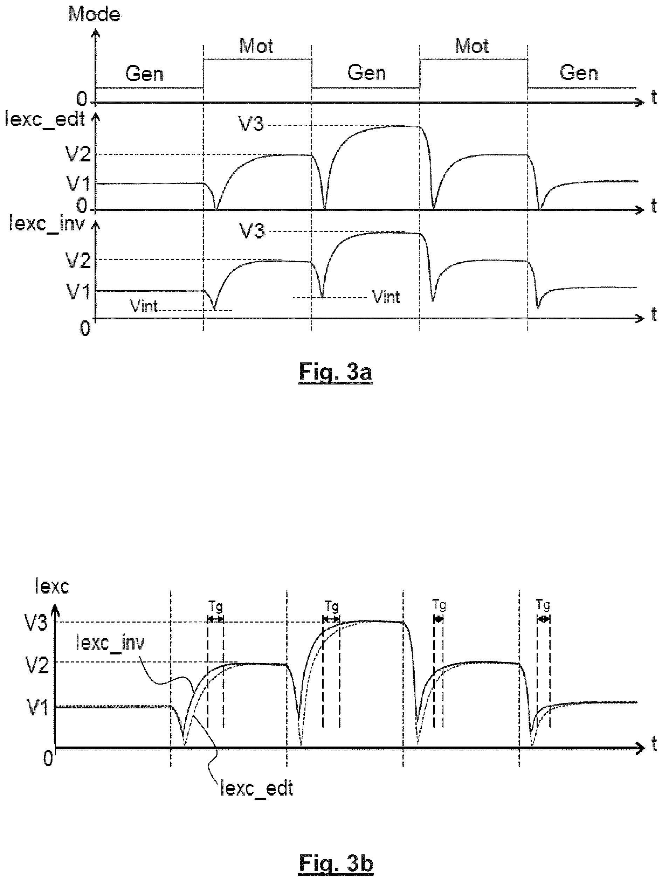

Comme cela est illustré sur la figure 3a, lorsque la machine électrique 10 passe d'un moteur générateur Gen à un mode moteur Mot dans une phase de fonctionnement particulière, la consigne du courant d'excitation V1 évolue vers une consigne d'excitation supérieure V2 en passant par une valeur de consigne intermédiaire Vint.

Puis, lorsque la machine électrique 10 passe du mode moteur Mot à un mode générateur Gen dans une autre phase de fonctionnement, la consigne du courant d'excitation V2 évolue vers une consigne d'excitation supérieure V3 en passant par une nouvelle valeur de consigne intermédiaire Vint.

Un fonctionnement analogue est observable lorsque l'on passe d'un mode à l'autre et que la consigne du courant d'excitation diminue.

Avec les procédés de l'état de la technique, on observe que le courant d'excitation lexc_edt passe systématiquement par la valeur nulle avant d'évoluer vers une nouvelle valeur de consigne.

L'invention permet ainsi, en évitant de défluxer complètement le rotor d'améliorer le temps de réponse de la machine électrique tournante sans générer d'à-coup de couple. La figure 3b met ainsi en évidence le gain de temps Tg procuré par l'invention qui permet d'atteindre plus rapidement les valeurs de consigne qu'avec une stratégie nécessitant de défluxer complètement le rotor 19.

Avantageusement, la valeur de consigne intermédiaire Vint dépend de la tension de sortie Vs de la machine électrique 10 et d'une vitesse de rotation du rotor. La tension de sortie Vs est mesurée entre une borne positive B+ de la machine électrique tournante 10 et une masse constituée par une carcasse de la machine électrique tournante 10. La vitesse de rotation du rotor 19 est mesurée au moyen des capteurs analogiques à effet hall H1, H2, H3 et de la cible magnétique 25 associée.

La valeur de consigne intermédiaire Vint pourra être déterminée à l'aide d'une cartographie ou d'une formule. Dans ce cas, on a:

$$\text{Vint} = G*(Vs/Wmel) + K1$$

Vs étant la tension de sortie de la machine électrique tournante,
Wmel étant la vitesse de rotation de la machine électrique tournante,
G étant un gain, et
K1 étant une valeur de décalage ("offset" en anglais).

Pour une machine particulière, on pourra par exemple avoir un gain valant 332 ainsi qu'un décalage valant -0.3.

**Revendications**

1. Procédé de pilotage d'une machine électrique tournante (10) pour véhicule automobile comportant un stator (18) et un rotor bobiné (19), le rotor bobiné (19) étant destiné à être parcouru par un courant d'excitation (I_exc_inv), ladite machine électrique tournante (10) étant apte à fonctionner dans un mode alternateur et dans un mode moteur, lorsque la machine électrique tournante (10) passe d'un mode de fonctionnement à un autre, ledit procédé comporte une étape de commande du rotor (19) de sorte que le courant d'excitation (Iexc_inv) évolue d'une première valeur de consigne (V1) vers une deuxième valeur de consigne (V2) en passant par une valeur de consigne intermédiaire minimale (Vint) strictement positive, **caractérisé en ce que** ladite valeur de consigne intermédiaire (Vint) correspondant à un courant d'excitation minimal au-dessus duquel la machine électrique tournante (10) délivre un courant continu en mode générateur et à partir duquel et en dessous duquel la machine électrique tournante ne délivre pas de courant continu.

2. Procédé selon la revendication 1, **caractérisé en ce que** la valeur de consigne intermédiaire (Vint) dépend d'une tension de sortie (Vs) de la machine électrique tournante (10) et d'une vitesse de rotation du rotor (19).

3. 4-Procédé selon la revendication 2, **caractérisé en ce que** la tension de sortie (Vs) est mesurée entre une borne positive (B+) de la machine électrique tournante (10) et une masse constituée par une carcasse de la machine électrique tournante (10).

4. Procédé selon la revendication 2 ou 3, **caractérisé en ce que** la vitesse de rotation du rotor (19) est mesurée au moyen de capteurs, tels que des capteurs analogiques à effet Hall.

5. Procédé selon l'une quelconque des revendications 1 à 4, **caractérisé en ce que** la valeur de consigne intermédiaire (Vint) est déterminée à l'aide d'une cartographie.

6. Procédé selon l'une quelconque des revendications 1 à 4, **caractérisé en ce que** la valeur de consigne intermédiaire (Vint) est déterminée à l'aide d'une formule.

7. Module de contrôle (14) pour machine électrique tournante (10) **caractérisé en ce que** qu'il comporte une mémoire stockant des instructions logicielles pour la mise en œuvre du procédé de pilotage de la machine électrique tournante (10) tel que défini selon l'une quelconque des revendications précédentes.

**Patentansprüche**

1. Verfahren zum Steuern einer rotierenden elektrischen Maschine (10) für ein Kraftfahrzeug, die einen Stator (18) und einen bewickelten Rotor (19) aufweist, wobei der bewickelte Rotor (19) dazu bestimmt ist, von einem Erregerstrom (I_exc_inv) durchflossen zu werden, wobei die rotierende elektrische Maschine (10) fähig ist, in einem Generatormodus und in einem Motormodus zu arbeiten,

wenn die rotierende elektrische Maschine (10) von einem Betriebsmodus in einen anderen übergeht, weist das Verfahren einen Schritt der Steuerung des Rotors (19) auf, so dass der Erregerstrom (I_exc_inv) sich von einem ersten Sollwert (V1) zu einem zweiten Sollwert (V2) entwickelt, indem er über einen strikt positiven minimalen Zwischensollwert (Vint) geht, **dadurch gekennzeichnet, dass**
der Zwischensollwert (Vint) einem minimalen Erregerstrom entspricht, oberhalb dessen die rotierende elektrische Maschine (10) einen Gleichstrom im Generatormodus liefert und ausgehend von dem und unterhalb dessen die rotierende elektrische Maschine keinen Gleichstrom liefert.

**2.** Verfahren nach Anspruch 1, **dadurch gekennzeichnet, dass** der Zwischensollwert (Vint) von einer Ausgangsspannung (Vs) der rotierenden elektrischen Maschine (10) und von einer Rotationsgeschwindigkeit des Rotors (19) abhängt.

**3.** Verfahren nach Anspruch 2, **dadurch gekennzeichnet, dass** die Ausgangsspannung (Vs) zwischen einer positiven Klemme (B+) der rotierenden elektrischen Maschine (10) und einer Masse gemessen wird, die von einem Gehäuse der rotierenden elektrischen Maschine (10) gebildet wird.

**4.** Verfahren nach Anspruch 2 oder 3, **dadurch gekennzeichnet, dass** die Rotationsgeschwindigkeit des Rotors (19) mittels Sensoren wie analogen Hall-Sensoren gemessen wird.

**5.** Verfahren nach einem der Ansprüche 1 bis 4, **dadurch gekennzeichnet, dass** der Zwischensollwert (Vint) mit Hilfe einer Kartographie bestimmt wird.

**6.** Verfahren nach einem der Ansprüche 1 bis 4, **dadurch gekennzeichnet, dass** der Zwischensollwert (Vint) mit Hilfe einer Formel bestimmt wird.

**7.** Kontrollmodul (14) für eine rotierende elektrische Maschine (10), **dadurch gekennzeichnet, dass** es einen Speicher aufweist, der Software-Anweisungen zur Durchführung des Steuerverfahrens der rotierenden elektrischen Maschine (10) wie in einem der vorhergehenden Ansprüche definiert speichert.

## Claims

**1.** Method for controlling a rotating electrical machine (10) for a motor vehicle comprising a stator (18) and a wound rotor (19), the wound rotor (19) being intended to be passed through by an excitation current (I_exc_inv), said rotating electrical machine (10) being able to operate in an alternator mode and in a motor mode,
when the rotating electrical machine (10) switches from one operating mode to another, said method comprises a step of control of the rotor (19) such that the excitation current (Iexc_inv) changes from a first setpoint value (VI) to a second setpoint value (V2) in passing through a strictly positive minimum intermediate setpoint value (Vint), **characterized in that** said intermediate setpoint value (Vint) corresponds to a minimum excitation current above which the rotating electrical machine (10) delivers a direct current in generator mode and from which and below which the rotating electrical machine does not deliver direct current.

**2.** Method according to Claim 1, **characterized in that** the intermediate setpoint value (Vint) depends on an output voltage (Vs) of the rotating electrical machine (10) and on a speed of rotation of the rotor (19).

**3.** Method according to Claim 2, **characterized in that** the output voltage (Vs) is measured between a positive terminal (B+) of the rotating electrical machine (10) and a mass consisting of a field frame of the rotating electrical machine (10).

**4.** Method according to Claim 2 or 3, **characterized in that** the speed of rotation of the rotor (19) is measured by means of sensors, such as Hall-effect analogue sensors.

**5.** Method according to any one of Claims 1 to 4, **characterized in that** the intermediate setpoint value (Vint) is determined using a mapping.

**6.** Method according to any one of Claims 1 to 4, **characterized in that** the intermediate setpoint value (Vint) is determined using a formula.

**7.** Control module (14) for a rotating electrical machine (10), **characterized in that** it comprises a memory storing software instructions for the implementation of the method for controlling the rotating electrical machine (10) as defined according to any one of the preceding claims.

**Fig. 1**

**Fig. 2**

**Fig. 3a**

**Fig. 3b**

**EP 3 747 121 B1**

## RÉFÉRENCES CITÉES DANS LA DESCRIPTION

**Documents brevets cités dans la description**

- US 5075616 A